# EUROPÄISCHE PATENTSCHRIFT

(11) **EP 1 917 164 B1**
(45) Veröffentlichungstag und Bekanntmachung des Hinweises auf die Patenterteilung: **01.04.2009**
(21) Anmeldenummer: 06829903.1
(22) Anmeldetag: 20.12.2006
(51) Int. Cl.: B60R 21/205

(54) **AIRBAGGEHÄUSE**
AIRBAG HOUSING
BOÎTIER POUR COUSSIN GONFLABLE DE SÉCURITÉ

(30) Priorität: 05.01.2006 DE 202006000300 U
(43) Veröffentlichungstag der Anmeldung: 07.05.2008
(73) Patentinhaber: Takata-Petri AG, 63743 Aschaffenburg (DE)
(72) Erfinder: SAHM, Norbert, 63743 Aschaffenburg (DE)
(74) Vertreter: Baumgärtel, Gunnar
(86) Internationale Anmeldenummer: PCT/EP2006/012636
(87) Internationale Veröffentlichungsnummer: WO 2007/077030

(56) Entgegenhaltungen:
- DE-A1- 2 035 742
- DE-A1- 10 155 857
- DE-U1- 29 715 738
- US-A- 5 553 887
- US-B1- 6 203 056

## Beschreibung

Airbaggehäuse sind zum Zeitpunkt der Auslösung des Airbags hohen Druckbelastungen ausgesetzt. Das führt insbesondere bei Gehäusen von Beifahrerairbags, die gewöhnlich hohe Seitenwände aufweisen, zu Deformationen. Gehäuse von Beifahrerairbagmodulen sind in der Draufsicht gesehen rechteckförmig um den zumeist rechteckförmigen Bauraum in der Armaturentafel vollständig auszunutzen. Um die Deformationen des Airbaggehäuses zu minimieren sind an diesen Gehäusen Versteifungen vorgesehen. Die Versteifungen verkleinern aber den für den Gassack benötigten Faltraum, da das Airbaggehäuse zwangsläufig verkleinert werden muss, um einschließlich der Versteifungen in den vorgegebenen Bauraum der Instrumententafel zu passen. In der Regel ist eine Vielzahl von Versteifungsrippen außen am Airbaggehäuse vorgesehen, um die notwendige Steifigkeit der Gehäusewände zu erreichen. Das führt zu erhöhtem Materialverbrauch und zu erhöhtem Gewicht des Airbaggehäuses. Zur weiteren Optimierung der Festigkeit sind die Ecken des Airbaggehäuses mehr oder weniger stark abgerundet. So ist aus der US 6 203 056 B1 ein Airbaggehäuse mit stark abgerundeten Ecken bekannt.

Der Erfindung liegt die Aufgabe zugrunde, ein Airbaggehäuse mit einem ähnlichen Faltraumvolumen wie ein versteiftes Airbaggehäuse des Standes der Technik mit geringerem Materialaufwand zu realisieren.

Erfindungsgemäß wird das gemäß den Merkmalen des Anspruchs 1 erreicht.

Bei einem Airbaggehäuse, insbesondere für Beifahrerairbagmodule mit hohen Seitenwänden, verlaufen die Seitenwände, in der Draufsicht gesehen, kurvenförmig, wobei zwei nach innen gewölbte Längswände und zwei nach außen gewölbte Stirnwände angeordnet sind. Diese kurvenförmigen Wände schränken zwar das Faltraumvolumen in ähnlicher Größe wie die versteiften Seitenwände der Airbaggehäuse des Standes der Technik ein, benötigen aber weniger oder keine Versteifungen, so dass Material, Kosten und Gewicht eingespart werden.

Diese Seitenwände sind vorzugsweise als Kreisabschnitte ausgebildet.

Bei einer weiteren Ausführungsform sind die Seitenwände in sich zumindest abschnittsweise abwechselnd nach innen und außen gewölbt.

Zur Erhöhung der Festigkeit können an den Längswänden außen Versteifungen vorgesehen sein. Vorzugsweise ist als Versteifung an jeder Längswand ein in Längsrichtung des Airbaggehäuses verlaufendes Versteifungsteil vorgesehen. Zwischen diesem und der Längswand ist mindestens eine Versteifungsrippe vorgesehen. Diese Versteifung benötigt aber wesentlich weniger Versteifungsrippen als ein Gehäuse des Standes der Technik. Vorzugsweise ist eine Versteifungsrippe in der Mitte jeder Längswand vorgesehen.

Die Erfindung soll in Ausführungsbeispielen anhand von Zeichnungen erläutert werden. Es zeigen:
- Fig. 1: die Draufsicht auf eine erste Ausführungsform des erfindungsgemäßen Airbaggehäuses für einen Beifahrerairbag;
- Fig. 2: das Airbaggehäuse nach Fig. 1 mit Versteifungen;
- Fig. 3: die Draufsicht auf eine zweite Ausführungsform des erfindungsgemäßen Airbaggehäuses für einen Beifahrerairbag.

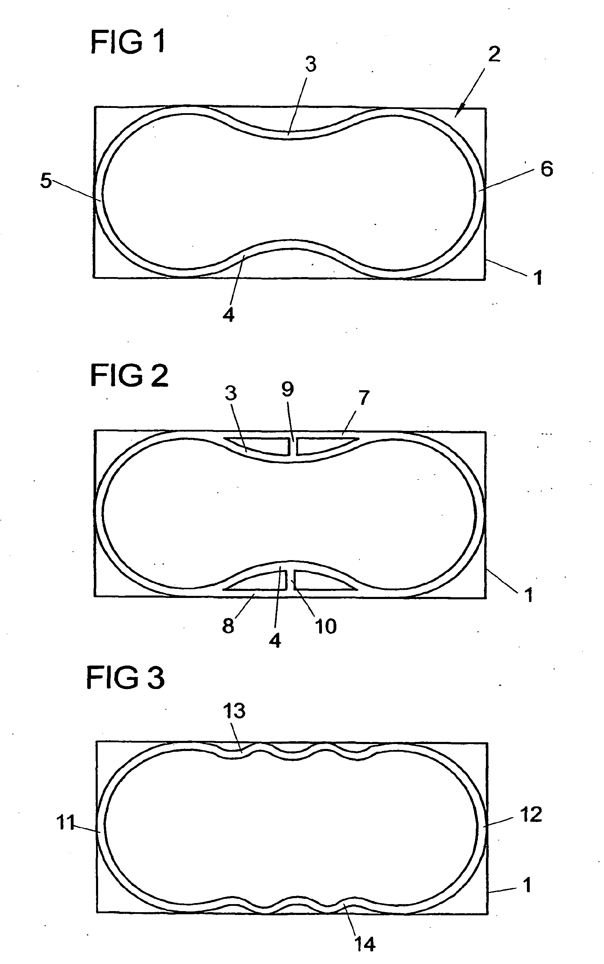

Die Figuren zeigen den rechteckförmigen Bauraum 1, der in der Instrumententafel für das Airbaggehäuse des Beifahrerairbags zur Verfügung steht. In der Fig. 1 ist ein Airbaggehäuse 2 dargestellt, dessen Wände Kreisabschnitte darstellen. Das Airbaggehäuse 2 weist zwei Längswände 3, 4 auf, die Kreissegmente darstellen und nach innen gewölbt sind. Diese sind mit Stirnwänden 5, 6 verbunden, die halbkreisförmig ausgestaltet und nach außen gewölbt sind. Diese Form gewährleistet bei einer entsprechenden Wandstärke mit weniger Material als bei einem Airbaggehäuse des Standes der Technik, dass sich das Airbaggehäuse nur in geringem Maße deformiert.

Die Fig. 2 zeigt eine Variante der Ausführungsform nach Fig. 1. Bei dieser Variante weist das Airbaggehäuse in der Draufsicht gesehen die gleiche Form auf wie das Airbaggehäuse 2 der Fig. 1. Gegenüber diesem sind im Bereich der Längswände 3, 4 Versteifungen 7, 8 angeordnet. Zwischen jeder Längswand 3, 4 und der zugeordneten Versteifung 7, 8 ist in der Mitte der Längswand eine Versteifungsrippe 9 bzw. 10 vorgesehen. Diese Versteifung erfordert wesentlich weniger Material als eine Versteifung bei einem Airbaggehäuse des Standes der Technik.

Bei der Ausführungsform der Fig. 3 sind Stirnwände 11, 12 wie in den Figuren 1 und 2 als nach außen gewölbte Halbkreise ausgebildet. Im Unterschied zu den Figuren 1 und 2 sind bei dieser Ausführungsform Längswände 13, 14 vorgesehen, die abwechselnd nach innen und nach außen gewölbt sind.

Die Erfindung ist nicht auf die dargestellten Ausführungsformen beschränkt. Vielmehr sind weitere Ausführungsformen möglich, bei denen die Seitenwände in der Draufsicht gesehen kurvenförmig verlaufen.

## Patentansprüche

1. Airbaggehäuse, insbesondere für Beifahrerairbagmodule mit hohen Seitenwänden,
**dadurch gekennzeichnet, dass** die Seitenwände (3, 4, 5, 6), in der Draufsicht gesehen, kurvenförmig verlaufen, wobei zwei nach innen gewölbte Längswände (3, 4) und zwei nach außen gewölbte Stirnwände (5, 6) angeordnet sind.

2. Airbaggehäuse nach Anspruch 1, **dadurch gekennzeichnet, dass** die Seitenwände (3, 4, 5, 6) als Kreisabschnitte ausgebildet sind.

3. Airbaggehäuse nach Anspruch 1, **dadurch gekennzeichnet, dass** die Seitenwände (13, 14) in sich zumindest abschnittsweise abwechselnd nach innen und außen gewölbt sind.

4. Airbaggehäuse nach mindestens einem der vorhergehenden Ansprüche, **dadurch gekennzeichnet, dass** die Längswände (3, 4) außen Versteifungen (7, 8, 9, 10) aufweisen.

5. Airbaggehäuse nach Anspruch 4, **dadurch gekennzeichnet, dass** als Versteifung an jeder Längswand (3, 4) ein in Längsrichtung des Airbaggehäuses (2) verlaufendes Versteifungsteil (7, 8) vorgesehen ist, zwischen dem und der Längswand (3, 4) mindestens eine Versteifungsrippe (9, 10) angeordnet ist.

6. Airbaggehäuse nach Anspruch 5, **dadurch gekennzeichnet, dass** eine einzige Versteifungsrippe (9, 10) in der Mitte jeder Längswand (3, 4) angeordnet ist.

## Claims

1. An airbag housing, in particular for front seat passenger airbag modules with high side walls, **characterized in that** the side walls (3, 4, 5, 6) have a curved profile, when viewed from above, with there being arranged two inwardly curved longitudinal walls (3, 4) and two outwardly curved end walls (5, 6).

2. The airbag housing as claimed in claim 1, **characterized in that** the side walls (3, 4, 5, 6) are designed as segments of a circle.

3. The airbag housing as claimed in claim 1, **characterized in that** at least sections of the side walls (13, 14) are inherently curved inward and outward in an alternating manner.

4. The airbag housing as claimed in at least one of the preceding claims, **characterized in that** the longitudinal walls (3, 4) have stiffening means (7, 8, 9, 10) on the outside.

5. The airbag housing as claimed in claim 4, **characterized in that** a stiffening part (7, 8) which runs in the longitudinal direction of the airbag housing (2) is provided as the stiffening means on each longitudinal wall (3, 4), and at least one stiffening rib (9, 10) is arranged between said stiffening part and the longitudinal wall (3, 4).

6. The airbag housing as claimed in claim 5, **characterized in that** a single stiffening rib (9, 10) is arranged in the center of each longitudinal wall (3, 4).

## Revendications

1. Boîtier d'airbag, en particulier pour un module d'airbag de passager, comportant des parois latérales hautes,
**caractérisé en ce que** les parois latérales (3, 4, 5, 6) s'étendent, en vue de dessus, sous forme incurvée, et dans lequel sont agencées deux parois longitudinales (3, 4) bombées vers l'intérieur et deux parois frontales (5, 6) bombées vers l'extérieur.

2. Boîtier d'airbag selon la revendication 1, **caractérisé en ce que** les parois latérales (3, 4, 5, 6) sont réalisées sous forme de portions circulaires.

3. Boîtier d'airbag selon la revendication 1, **caractérisé en ce que** les parois latérales (13, 14) sont bombées en elles-mêmes au moins par tronçons alternativement vers l'intérieur et vers l'extérieur.

4. Boîtier d'airbag selon l'une au moins des revendications précédentes, **caractérisé en ce que** les parois longitudinales (3, 4) comportent des raidissements extérieurs (7, 8, 9, 10).

5. Boîtier d'airbag selon la revendication 4, **caractérisé en ce qu'**il est prévu, à titre de raidissement sur chaque paroi longitudinale (3, 4), une pièce de raidissement (7, 8) qui s'étend dans la direction longitudinale du boîtier d'airbag (2), avec au moins une nervure de raidissement (9, 10) agencée entre ladite pièce de raidissement et la paroi longitudinale (3,4).

6. Boîtier d'airbag selon la revendication 5, **caractérisé en ce qu'**une unique nervure de raidissement (9, 10) est agencée au milieu de chaque paroi longitudinale (3, 4).
